# EUROPEAN PATENT SPECIFICATION

(11) **EP 1 944 227 B1**
(45) Date of publication and mention of the grant of the patent: **19.10.2011**
(21) Application number: 07123245.8
(22) Date of filing: 14.12.2007
(51) Int. Cl.: B62J 99/00

(54) **Rear spoiler comprising a speaker**
Heckspoiler mit einem Lautsprecher
Déflecteur arrière avec un haut-parleur

(30) Priority: 10.01.2007 JP 2007002354
(43) Date of publication of application: 16.07.2008
(73) Proprietor: Honda Motor Co., Ltd., Minato-ku Tokyo 107-8556 (JP)
(72) Inventor: Yonai, Masato c/o HONDA R&D Co., Ltd., Saitama, 351-0193 (JP); Kuroda, Kosuke c/o HONDA R&D Co., Ltd., Saitama, 351-0193 (JP)
(74) Representative: Quinterno, Giuseppe

(56) References cited:
- WO-A-02/43254
- WO-A-99/41133
- US-A- 4 915 187
- US-A1- 2005 046 250

## Description

The present invention relates to a rear spoiler, and more particularly to a rear spoiler for arrangement behind a seat of a saddle-type vehicle.

US-A-4915187 discloses a rear structure for arrangement behind a seat of a motorcycle, comprising
a rear trunk provided with a retainer section for retaining said trunk to the motorcycle, said retainer section being constituted of a hollow member,
a backrest arranged in front of said rear trunk,
at least one speaker, provided in said rear structure, arranged longitudinally in front of the backrest, and having an opening directed upwards,
an electric wire connected with the speaker and passing through the inside of the retainer section, and
first and second armrests connected to and extending from both ends of the rear trunk, on the right and the left side of the backrest, respectively; said armrests and the backrest being arranged such that they join to form a sort of letter L in side view.

Japanese registered patent publication No. 3289782 discloses a conventional saddle-type vehicle, such as a scooter type motorcycle, provided on a rear part thereof with a rear spoiler for rectifying air that flows from front to back during traveling.

Said patent publication discloses a rear cover incorporated in a rear part of the vehicle with a lamp unit containing a combined taillight and stop lamp, a blinker lamp, etc. and a rear spoiler provided above the rear cover in a manner surrounding the rear part of a seat from behind.

In view of the foregoing, it is an object of the present invention to provide an improved rear spoiler of the initially defined kind.

To achieve the above object, there is proposed a rear spoiler whose main features are defined in claim 1.

In a rear spoiler according to a second aspect of the invention
said spoiler body is constituted of a hollow member, including a window for speaker formed on a front side, said window for speaker being open to a top side; a communication hole that is open to a bottom side; and
said speaker is attached in a manner facing said window for speaker, with a vibrator member being directed upward.

In a rear spoiler according to a third aspect of the invention
said spoiler body includes a guard member provided in said window for speaker; first and second speakers being provided on the right and the left sides in the wing section of the spoiler body.

In a rear spoiler according to claim 1, the speaker is provided in a front part of the spoiler body, and the electric wire for said speaker is passed through the inside of the retainer section. Accordingly, it is possible to form the rear spoiler in a simple shape as a whole. Further, since the speaker is provided in the spoiler body, assemblability can be improved.

In a rear spoiler of the aforesaid second aspect, a communication hole can be provided, thus enabling the electric wire for the speaker to be inserted therethrough, and water taken into the spoiler body to be discharged therethrough.

In a rear spoiler of the aforesaid third aspect, the speakers can be brought closer to the passenger, thus ensuring the reliable transmission of music to the passenger wearing a helmet even in noisy conditions.
Fig. 1 is a perspective view showing an overall structure of a vehicle in accordance with an embodiment of the present invention.
Fig. 2 is a perspective view showing an overall structure of a rear spoiler in accordance with the embodiment of the present invention.
Fig. 3 is a plan view showing the structure of the rear spoiler in accordance with the embodiment of the present invention.
Fig. 4 is a side view showing the structure of the rear spoiler in accordance with the embodiment of the present invention.
Fig. 5 is a longitudinal section showing the structure of the rear spoiler in accordance with the embodiment of the present invention.
Fig. 6 is a rear view showing the structure of the rear spoiler in accordance with the embodiment of the present invention.
Fig. 7 is a longitudinal section showing a modified example of the rear spoiler in accordance with the embodiment of the present invention.

Next is a description of preferred embodiments of the present invention with reference to the attached drawings.

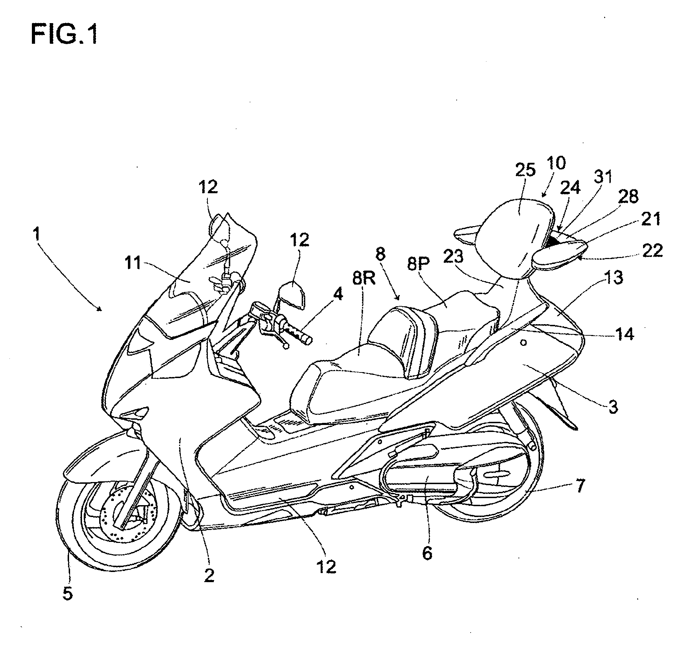

A motor scooter type motorcycle 1 (hereinafter called "vehicle 1") as a saddle-type vehicle shown in Fig. 1 comprises a vehicle frame (not shown), a front cover 2, a rear cover 3, a handle 4, a front wheel 5, a power unit 6, a rear wheel 7, a seat unit 8 and a rear spoiler 10, and it is constituted so that a rider riding on the seat unit 8 may operate it by steering the handle 4.

That is, the vehicle frame is covered with the front cover 2 and the rear cover 3; the front wheel 5 steered by the handle 4 is provided on a front part of the vehicle frame; the power unit 6 supported movably in the vertical direction is provided near a central part; and the rear wheel 7 is integrally fitted to an output shaft of the power unit 6.

A front shield 11 serving as a wind guard for passengers sitting on the seat unit 8 is provided on the front cover 2. Moreover, the handle 4 is provided with a pair of side mirrors 12, protruding in the width direction on right and left sides of the vehicle 1. Above the power unit 6 is provided the seat unit 8 that is mounted to a seat frame (not shown) fixedly attached to the vehicle frame.

The seat unit 8 comprises a rider seat member 8R and a passenger seat member 8P that are arranged in the longitudinal direction. Between the seat unit 8 and a rear side of the front cover 2 are provided a pair of footrests 12 for a rider sitting on the rider seat member 8R to place his/her both legs on, on right and left sides with respect to the traveling direction of the vehicle.

A lamp unit 13 comprising a taillight, a blinker lamp, etc. is fitted to the rear end of the rear cover 3, while a pair of grab rails 14 are provided in the vicinity of the passenger seat member 8P. Accordingly, the grab rails 14 are fixedly arranged on the front side of the rear spoiler 10 and in the vicinity of the surface of the vehicle 1.

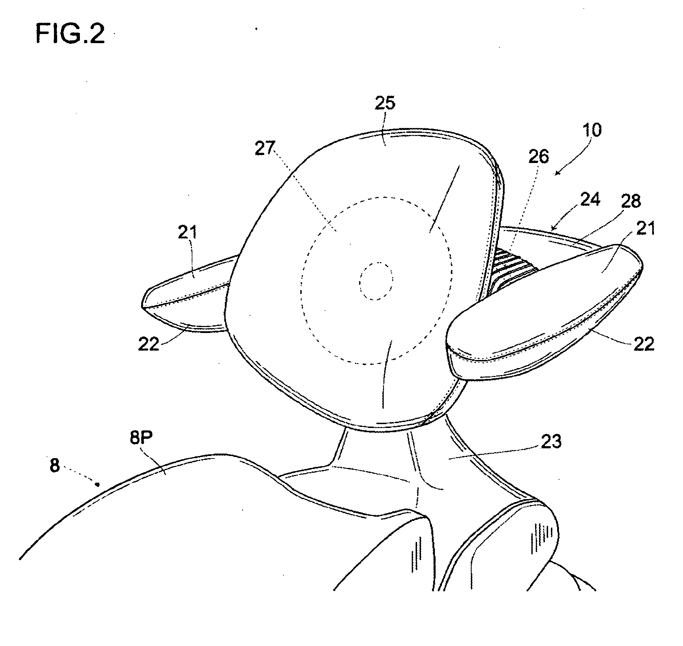

The rear spoiler 10 is fixed to a seat frame at the rear end of the vehicle 1 so that the air flowing through the sides of the vehicle 1 may be rectified during the travel. As shown in Fig. 2, the rear spoiler 10 comprises a spoiler body 24 including: spoiler sections 22 each equipped with an arm-resting surface 21; and a retainer section 23 provided so as to be capable of retaining the spoiler sections 22 above the seat unit 8.

The spoiler body 24 further comprises a backrest 25 for supporting a passenger sitting on the passenger seat member 8P from back. The spoiler body 24 further comprises a sound equipment composed of an amplifier (not shown), speakers 26 and a woofer 27 for use in reproduction of deep bass sound so that music or the like may be provided to the passengers.

The retainer section 23, i.e., the lower section of the spoiler body 24, is constituted of a hollow pillar-shaped member of a single piece structure, extending vertically from a transverse center of the vehicle 1. One end of the retainer section 23 is fixed to the seat frame, while the other end thereof extends up to a wing section 28 or the upper section of the spoiler body 24. The retainer section 23 is formed with a smoothly-contoured surface, and both the ends thereof are gradually expanded like the foot of a mountain, communicating with the rear end of the vehicle 1 and the wing section 28, respectively, while prescribing a constricted portion in the vicinity of the center thereof.

The spoiler sections 22 are provided integrally with the wing section 28. Thus, the retainer section 23 is capable of retaining the spoiler sections 22 above the seat unit 8, at a height approximate to the height of the elbows of the passenger sitting on the passenger seat member 8P.

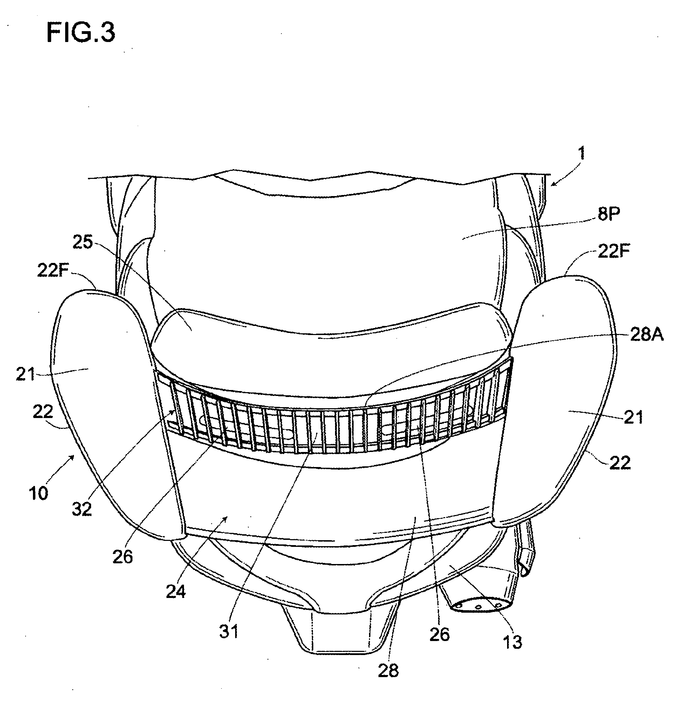

As shown in Fig. 3, the wing section 28 comprises a hollow tabular member elongated in the width direction of the vehicle 1, provided with the backrest 25 in the center thereof and the spoiler section 22 arranged on both ends thereof. The spoiler section 22 is arranged in pairs on right and left sides with the backrest 25 arranged therebetween, having a distal end 22F protruding forward of the backrest 25 toward the front side of the vehicle 1.

In a plan view, the wing section 28 is formed with a curved surface 28A which is gently curved concavely relative to the front side of the vehicle 1, while the backrest 25 having a similarly curved surface is allowed to abut to the curved surface 28A. The wing section 28 has an upwardly-directed window 31 for speakers, containing speakers 26 thereinside.

The window 31 for speakers, covered with a guard member 32, is provided adjacent to the curved surface 28A along the entire length of the wing section 28 in a manner surrounding said backrest 25 from behind. Incidentally, the guard member 32 may be configured in various ways, such as those having a surface configured in a mesh or a grid.

Said speakers 26 are disposed apart from each other on the right and left sides of the spoiler body 24, each having an upwardly-directed opening so that music or the like may be transmitted through the guard member 32 to reach above the spoiler body 24. In the present embodiment, the speakers 26 are provided in pairs on right and left sides, each provided in the wing section 28 with a vibrator member thereof being directed substantially upwardly.

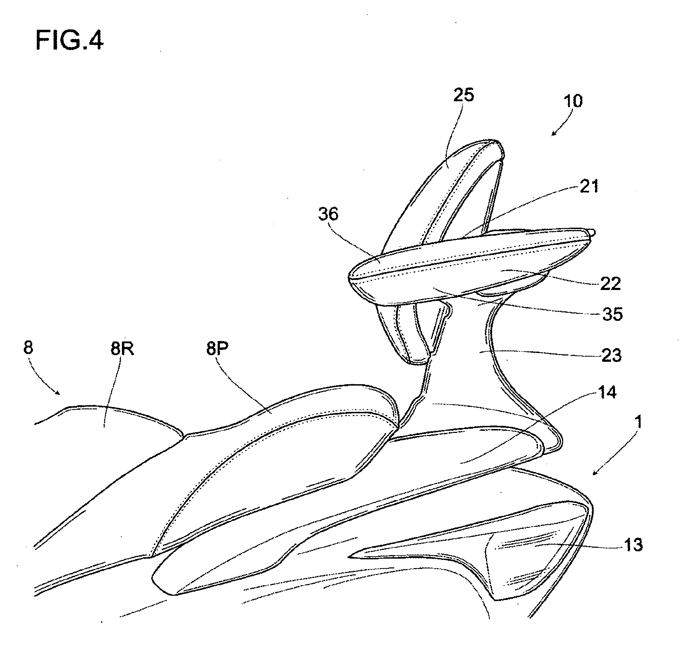

As shown in Fig. 4, each spoiler section 22 is mounted so that it is inclined downward as it progresses toward the front of the vehicle. Accordingly, in a side view, the spoiler section 22 and the backrest 25 are arranged so that it may be crossed in a manner like a letter X. Moreover, the spoiler section 22 includes a convex part 35 on an undersurface thereof, expanding toward a bottom, defining a comparatively thick portion on the front side of vehicle 1 while a comparatively thin portion on the rear side thereof.

Moreover, the spoiler section 22 includes an arm-resting surface 21 on an upper surface thereof, said arm-resting surface 21 having a flat surface so that the elbow of the passenger sitting on the passenger seat member 8P may be supported therewith. The arm-resting surface 21 is covered with a covering member 36 having cushioning properties. The upper surface of the spoiler section 22, i.e., the arm-resting surface 21, and the undersurface of the spoiler section 22 are covered with the covering member 36 so that it may not be deformed by the wind pressure during the travel, etc. Preferably, the covering member 36 may have a surface which is comfortably soft and less slippery. The covering member 36 of the present embodiment is constituted of artificial leather.

It goes without saying that the covering member 36 that covers a portion of the spoiler sections 22 other than the arm-resting surfaces 21 does not need to have cushioning properties. By constituting the spoiler section 22 in this way, the rear spoiler 10 is allowed to have an air-rectifying function and an arm-resting function.

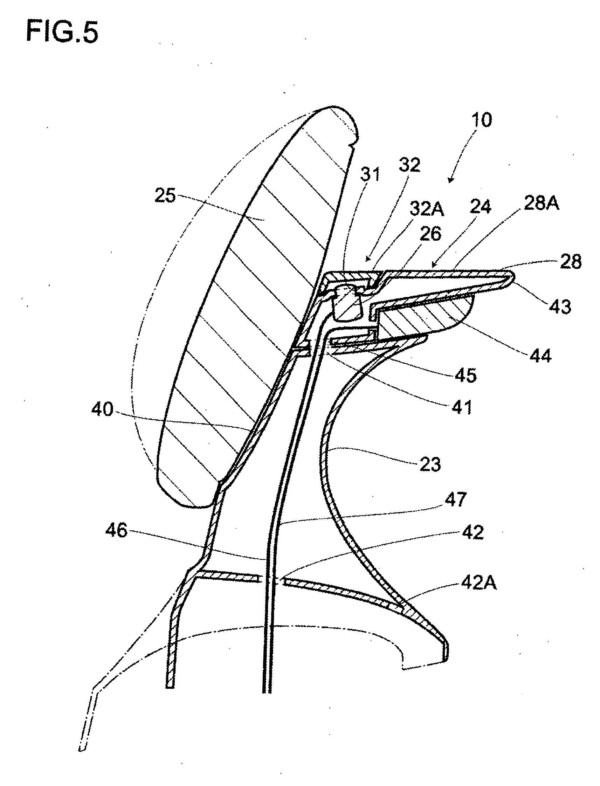

As shown in Fig. 5, the front side of the spoiler body 24 is formed with an inclined surface 40 that inclines toward the rear side of the vehicle 1 as it extends upwards so as to be able to retain the backrest 25 with the same being tilted rearwards. The retainer section 23 is formed with an upper communication hole 41 at a top end, and a lower communication hole 42 at a bottom end. The lower communication hoe 42 is open to the bottom side, communicated with the rear cover 3.

The window 31 for speakers formed in the wing section 28 is provided in a position depressed relative to the upper surface thereof, and the upper end surface 32A of the guard member 32 provided in this window 31 for speakers is formed flush with the upper surface 28A of the wing section 28. The wing section 28 has a rear vane 43 formed by projecting the upper surface 28A toward the rear side of the vehicle 1, and a high mount stop lamp 44 is provided below the rear vane 43 with the same sandwiched between the upper end of the retainer section 23 and the rear vane 43. A penetration hole 45 communicating with the upper communication hole 41 provided on the upper end of the retainer section 23 is provided at a lower end of the wing section 28.

The speakers 26 are each electrically connected to an amplifier installed at the main body side of the vehicle 1 through an electric wire 46 for speaker. Each electric wire 46 for speaker connected to the speaker 26 passes through the penetration hole 45 and the upper communication hole 41, traversing the inside of the spoiler body 24, and is connected to the amplifier through the lower communication hole 42.

The high mount stop lamp 44 is arranged below the rear vane 43 of the wing section 28, in a position retracted from the rear end of the rear vane 43 thereof. The high mount stop lamp 44 comprises, though not illustrated, a group of lamps provided by juxtaposing two or more LEDs, and a lens that covers the lamp group and is directed rearwards of the vehicle 1. The lamp group is electrically connected to a power supply unit (not shown) provided in the main body side of the vehicle 1 via an electric wire 47 for lamp. Like the electric wires 46 for speakers, the electric wire 47 for lamp traverses the spoiler body 24, and is connected to the power supply unit through the lower communication hole 42.

A drain opening 42A is formed in the lower part of the spoiler body 24. The drain opening 42A is vertically formed in the lowermost position on the bottom surface of the spoiler body 24 so that the water taken in from the window 31 for speakers can be discharged from the drain opening 42A to the exterior.

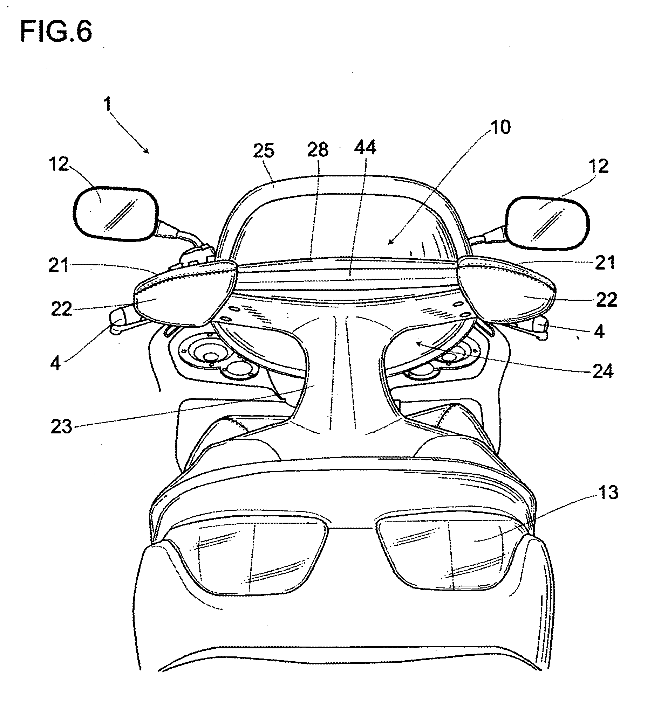

As shown in Fig. 6, the spoiler body 24 is constituted of a member that is letter-T-shaped in a rear view. The rear spoiler 10 is formed such that the dimension of the spoiler body 24 with respect to the width direction of the vehicle 1 is shorter than the total width of the vehicle 1, i.e., the distance between the side mirrors 12. In other words, the rear spoiler 10 is formed such that both ends of the right and left spoiler sections 22 provided in pairs are disposed within the total width of the vehicle 1 as defined by the distance between the side mirrors 12. Incidentally, the high mount stop lamp 44 is provided in the wing section 28 on the rear side of the vehicle 1, arranged linearly between the pair of the spoiler sections 22.

A portion of each spoiler section 22 that protrudes from the backrest 25 toward the front side of the vehicle 1 has a V-shaped profile in a rear view such that it gradually tapers from a top toward a bottom. Furthermore, the portion of each spoiler section 22 that protrudes from the backrest 25 toward the front side of the vehicle 1 is formed thinner at the outside than at the inside, in a rear view.

Next, an action and effect of the above-mentioned structure are explained.

The rear spoiler 10 allows each spoiler section 22 to be retained above the seat unit 8, at a height approximate to the height of the elbows of the passenger sitting on the passenger seat member 8P, thereby ensuring the rectifying of air without being influenced by a turbulent flow generated in the vicinity of the surface of the vehicle 1.

Moreover, the rear spoiler 10 is provided with the arm-resting surfaces 21 on each spoiler section 22 in order to support the elbows of the passenger sitting on the passenger seat member 8P, thereby enabling a sense of stability to be given to the passenger. Besides, each spoiler section 22 is provided with an air-rectifying function and an arm-resting function, thereby achieving the saving of space.

In addition, the arm-resting surface 21 of the rear spoiler 10 is covered with the covering member 36 having cushioning properties, thus enabling the improving of the feel of the arm-resting surface 21 the passenger may have when resting his/her elbow thereon. Moreover, since the covering member 36 is made of artificial leather so as to be able to generate contact resistance, the slippage of the elbow resting on the arm-resting surface 21 can be prevented, thus improving the sense of stability.

Further, the rear spoiler 10 is formed with the concavely curved surface 28A on the front side thereof, while the backrest 25 having a similarly curved surface is allowed to abut to the curved surface 28A, thereby ensuring the vicinity of the waist sitting on the passenger seat member 8P to be retained reliably, thus further improving the sense of stability.

Furthermore, the rear spoiler 10 retains the spoiler sections 22 by the retainer section 23 of one-piece structure, provided in the center of the vehicle 1, thereby enabling the reduction of air resistance.

Moreover, since each spoiler section 22 is formed so that the distal end thereof may protrude forward of the backrest 25, it can rectify airflow with less influence from the turbulent airflow caused by the backrest 25.

Also, the rear spoiler 10 is formed such that the dimension of the spoiler body 24 with respect to the width direction of the vehicle 1 is shorter than the distance between the side mirrors 12, which in turn means that the distance between the side mirrors 12 provides a total width of the vehicle 1, thus enabling a driver or rider to easily capture the sense of the vehicle 1, improving the operational performance thereof.

Still also, the rear spoiler 10 has the window 31 for speakers, providing the speakers 26 thereinside to thereby contain the speakers 26 inside the wing section 28, thus enabling the rear structure of the vehicle 1 to be compactified. Further, assemblability can be improved by providing the speakers 26 in the spoiler body 24.

Also, since the wing section 28 is retained in a position above the seat unit 8 by the retainer section 23, the speakers 26 can be brought closer to the passenger. Accordingly, the rear spoiler 10 ensures the reliable transmission of music even in noisy conditions.

Moreover, since the rear spoiler 10 has the window 31 for speakers provided adjacent to the curve surface 28A in a manner surrounding the backrest 25, it is possible to bring the speakers 26 close to the passengers, thus enabling music or the like to be transmitted efficiently.

Still moreover, since the rear spoiler 10 has the window 31 for speakers open to the top and the vibrator members of said speakers 26 are directed upwardly, acoustic directivity is ensured toward the holes of the helmet of the passenger sitting on the passenger seat member 8P, thereby enabling music or the like to be transmitted efficiently. Alternatively, the helmet may comprise a sound transmitting hole formed through the undersurface of a cap body of the helmet, thus enabling music to be supplied to the passenger more effectively.

Further, since the rear spoiler 10 contains the electric wires 46 for speakers and the electric wires 47 for lamps inside the spoiler body 24, it can improve design properties.

Still further, since the rear spoiler 10 contains the woofer 27 inside the backrest 25, it is possible to accommodate a comparatively wide woofer thereinside, thus enabling powerful low frequency sound to be reproduced.

In the meantime, it is to be noted that the rear spoiler 10 includes the high mount stop lamp 44 provided in the wing section 28 located at a higher position than the conventional ones.

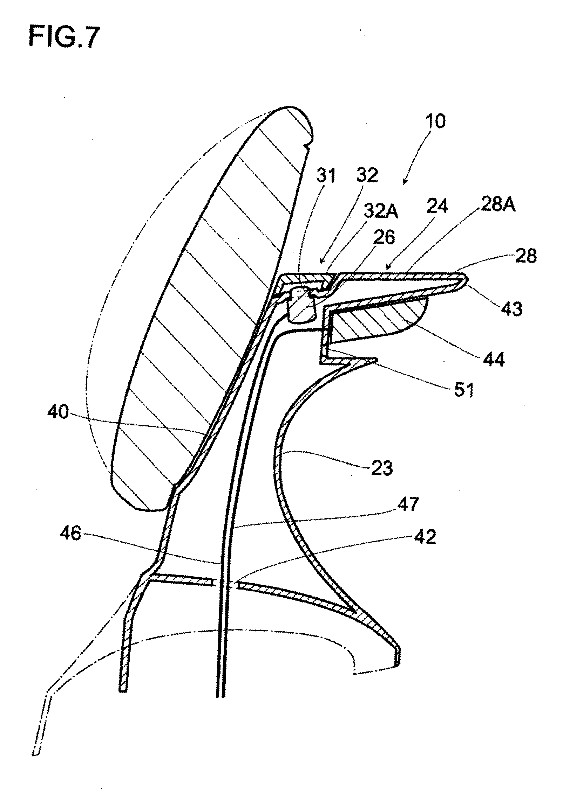

The present invention is not limited to the foregoing embodiment, but various modifications are possible within the scope of the present invention. For example, although the foregoing embodiment proposes a case where the retainer section 23 and the wing section 28 are separate from each other in the spoiler body 24 such that they are communicated with each other through the upper communication hole 41 provided in the retainer section 23 and the penetration hole 45 provided in the wing section 28, the present invention is not limited thereto. In an alternative form of the invention, the spoiler body 24 may be formed so as to provide the retainer section 23 and the wing section 28 in a one-piece structure, as shown in Fig. 7.

Still alternatively, as is also shown in Fig. 7, the spoiler body 24 may be provided with a vent hole 51 that is open to the rear side of the vehicle 1, provided below the high mount stop lamp 44. Providing the vent hole 51 on the spoiler body 24 enables sound pressure from the speakers 26 to be released to the exterior.

Due to the vent hole 51 being provided below the high mount stop lamp 44, the spoiler body 24 can prevent rain or dusts from being taken in through the vent hole 51, since the rear vane 43 of the wing section 28 or the high mount stop lamp 44 can serve as a roof.

Although the vehicle 1 is a scooter type motorcycle in the foregoing embodiment, the present invention is not limited thereto, but may be applicable to any saddle-type vehicle, such as three-wheeled or four-wheeled motor vehicle.

Moreover, although the backrest 25 is fixedly provided in the spoiler body 24 in the foregoing embodiment, the present invention is not limited thereto, but the backrest 25 may be removably provided therein. Making the backrest 25 removable enables the backrest 25 to be removed when a passenger does not sit on the passenger seat member 8P, thus reducing the air resistance. The removed backrest 25 may be stored in a storage box provided below the seat unit 8.

Although the covering member 36 is fixedly provided in the spoiler section 22 in the foregoing embodiment, the present invention is not limited thereto, but the covering member 36 may be removably provided in the spoiler section 22. In that case, the removed covering member may be stored in the storage box provided below the seat unit 8.

Although the speakers 26 are provided inside the spoiler body 24 by installing them inside the window 31 for speakers provided in the wing section 28 in the foregoing embodiment, the present invention should not be limited thereto, but the speakers 26 may be provided separately from the spoiler body 24. In that case, it is preferable that the guard member 32 which covers the speakers 26 may be formed flush with the upper surface of the wing section 28.

Although the amplifier is provided in the vehicle 1 in the foregoing embodiment, the present invention should not be limited thereto, but it may be installed inside the spoiler body 24, such as inside the wing section 28 or the retainer section 23 after waterproofing the same.

Although each spoiler section 22 is covered with the covering member 36 in the foregoing embodiment, the present invention should not be limited thereto, but any other suitable portion thereof may be covered therewith. For example, it may cover at least a portion of the spoiler part 22 on which the passenger sitting on the passenger seat member 8P rests his/her elbow, i.e., a portion that projects forward from the backrest 25.

Although the spoiler sections 22 are retained above the seat unit 8 by the single retainer section 23 in the foregoing embodiment, the present invention should not be limited thereto, but they may be supported by two or more retainer sections 23. That is, the retainer section 23 may be provided at right and left sides of the vehicle 1, respectively, and the spoiler section 22 may be provided for each corresponding retainer section 23.

Although the drain opening 42A is provided in the lower part of the spoiler body 24 in the foregoing embodiment, the lower communication hole 42 may be provided to serve as a drain opening as well.

## Claims

1. A rear spoiler (10) for arrangement behind a seat (8) of a saddle-type vehicle (1), including
a rear spoiler body (24) provided with a retainer section (23) for retaining the rear spoiler body (24) to said vehicle (1), said retainer section (23) being constituted of a hollow member,
a backrest (25) arranged in a front part of said rear spoiler body (24),
at least one speaker (26) provided in a front part of said rear spoiler body (24), said speaker (26) having an opening directed upwards,
an electric wire (46) connected with said speaker (26) and passing through the inside of said retainer section (23),
a transverse wing section (28) extending on the rear of the backrest (25), and connected with said retainer section (23),
first and second spoiler sections (22) integrally provided with said transverse wing section (28) and extending from both ends of said transverse wing section (28), on the right side and the left side of the backrest (25), respectively; said spoiler sections (22) being inclined downwards toward the front of the spoiler structure (10);
the backrest (25) and said spoiler sections (22) being arranged such that they cross like a letter X in side view;
said at least one speaker (26) being arranged behind the backrest (25).

2. The rear spoiler according to claim 1, wherein
said spoiler body (24) is constituted of a hollow member, including: a window (31) for speaker formed on a front side; and a communication hole (42) that is open to a bottom side,
wherein said window (31) for speaker is open to a top side, and said speaker (26) is attached in a manner facing said window (31) for speaker, with a vibrator member being directed upward.

3. The rear spoiler according to claim 2, wherein
said spoiler body (24) includes a guard member (32) provided in said window (31) first and second speakers (26) being provided on the right and the left sides in the wing section (28) of the spoiler body (24).

4. The rear spoiler according to any of claims 1 to 3, wherein said spoiler body (24) is provided with a vent hole (51) that is open to the rear side thereof.

5. The rear spoiler according to claim 3, wherein a woofer (27) is provided inside said backrest (25).

6. The rear spoiler according to claim 3, wherein a high mount stop lamp (44) is provided in the wing section (28) of said spoiler body (24), and a vent hole (51) that is open to the rear side of said body (24) is provided below said high mount stop lamp (44).

7. The rear spoiler according to any one of the claims 1 to 3, wherein each said spoiler section (22) includes a convex part (35) on an undersurface thereof, expanding toward a bottom, defining a comparatively thick portion on the front side thereof, while a comparatively thin portion is defined on the rear side thereof.

## Patentansprüche

1. Heckspoiler (10) zur Anordnung hinter einem Sitz (8) eines Fahrzeugs (1) vom Satteltyp, umfassend:
einen Heckspoiler-Körper (24), der mit einem Halte-Abschnitt (23) versehen ist, um den Heckspoiler-Körper (24) an dem Fahrzeug (1) zu halten, wobei der Halte-Abschnitt (23) durch ein hohles Bauteil gebildet ist,
eine Rückenlehne (25), die in einem vorderen Teil von dem Heckspoiler-Körper (24) angeordnet ist,
wenigstens einen Lautsprecher (26), der in einem vorderen Teil von dem Heckspoiler-Körper (24) vorgesehen ist, wobei der Lautsprecher (26) eine Öffnung aufweist, die nach oben gerichtet ist,
eine elektrische Leitung (46), die mit dem Lautsprecher (26) verbunden ist und durch das Innere von dem Halte-Abschnitt (23) verläuft,
einen Quer-Flügel-Abschnitt (28), der sich auf der Rückseite von der Rückenlehne (25) erstreckt und mit dem Halte-Abschnitt (23) verbunden ist,
einen ersten und einen zweiten Spoiler-Abschnitt (22), die integral mit dem Quer-Flügel-Abschnitt (28) vorgesehen sind und sich von beiden Enden des Quer-Flügel-Abschnitts (28) erstrecken, auf der rechten Seite beziehungsweise der linken Seite der Rückenlehne (25), wobei die Spoiler-Abschnitte (22) nach unten zur Vorderseite der Spoiler-Struktur (10) geneigt sind,
wobei die Rückenlehne (25) und die Spoiler-Abschnitte (22) so angeordnet sind, dass sie einander, bei Betrachtung von der Seite, wie ein Buchstabe X kreuzen,
wobei der wenigstens eine Lautsprecher (26) hinter der Rückenlehne (25) angeordnet ist.

2. Heckspoiler nach Anspruch 1, wobei der Spoiler-Körper (24) aus einem hohlen Bauteil gebildet ist, welches umfasst:
ein Lautsprecher-Fenster (31 ), das an einer vorderen Seite ausgebildet ist, und ein Verbindungsloch (42), das zu einer unteren Seite offen ist,
wobei das Lautsprecher-Fenster (31) zu einer oberen Seite hin offen ist und der Lautsprecher (26) derart angebracht ist, dass er dem Lautsprecher-Fenster (31) zugewandt ist, wobei ein Vibrator-Element nach oben gerichtet ist.

3. Heckspoiler nach Anspruch 2, wobei der Spoiler-Körper (24) ein SchutzElement (32) umfasst, welches in dem Fenster (31) vorgesehen ist, wobei ein erster und ein zweiter Lautsprecher (26) auf der rechten und linken Seite in dem Flügel-Abschnitt (28) von dem Spoiler-Körper (24) vorgesehen sind.

4. Heckspoiler nach einem der Ansprüche 1 bis 3, wobei der Spoiler-Körper (24) mit einem Belüftungsloch (51) versehen ist, welches zu der Rückseite davon offen ist.

5. Heckspoiler nach Anspruch 3, wobei ein Tieftöner (27) innerhalb der Rückenlehne (25) vorgesehen ist.

6. Heckspoiler nach Anspruch 3, wobei eine hoch gesetzte Bremsleuchte (44) in dem Flügel-Abschnitt (28) von dem Spoiler-Körper (24) vorgesehen ist, und ein Belüftungsloch (51), welches zu der Rückseite von dem Körper (24) offen ist, unterhalb von der hoch gesetzten Bremsleuchte (44) vorgesehen ist.

7. Heckspoiler nach einem der Ansprüche 1 bis 3, wobei jeder Spoiler-Abschnitt (22) einen konvexen Teil (35) an einer unteren Fläche davon aufweist, der sich zu einem Boden hin ausdehnt, was einen vergleichsweise dicken Abschnitt an der vorderen Seite davon definiert, während ein vergleichsweise dünner Abschnitt an der hinteren Seite davon definiert ist.

## Revendications

1. Déflecteur arrière (10) destiné à être agencé derrière un siège (8) d'un véhicule de type à selle (1), comprenant :
un corps de déflecteur arrière (24) prévu avec une section de retenue (23) pour retenir le corps de déflecteur arrière (24) sur ledit véhicule (1), ladite section de retenue (23) étant constituée par un élément creux,
un dossier (25) agencé dans une partie avant dudit corps de déflecteur arrière (24),
au moins un haut-parleur (26) prévu dans une partie avant dudit corps de déflecteur arrière (24), ledit haut-parleur (26) ayant une ouverture dirigée vers le haut,
un fil électrique (46) raccordé avec ledit haut-parleur (26) et passant par l'intérieur de ladite section de retenue (23),
une section d'aile transversale (28) s'étendant sur l'arrière du dossier (25), et raccordée avec ladite section de retenue (23),
des première et deuxième sections de déflecteur (22) prévues de manière solidaire avec ladite section d'aile transversale (28) et s'étendant à partir des deux extrémités de ladite section d'aile transversale (28), du côté droit et du côté gauche du dossier (25) respectivement ; lesdites sections de déflecteur (22) étant inclinées vers le bas vers l'avant de la structure de déflecteur (10) ;
le dossier (25) et lesdites sections de déflecteur (22) étant agencés de sorte qu'ils se croisent comme la lettre X en vue de côté ;
ledit au moins un haut-parleur (26) étant agencé derrière le dossier (25).

2. Déflecteur arrière selon la revendication 1, dans lequel :
ledit corps de déflecteur (24) est constitué par un élément creux, comprenant : une fenêtre (31) pour le haut-parleur formé sur un côté avant ; et un trou de communication (42) qui est ouvert vers un côté inférieur,
dans lequel ladite fenêtre (31) pour haut-parleur est ouverte sur un côté supérieur, et ledit haut-parleur (26) est fixé d'une manière faisant face à ladite fenêtre (31) pour le haut-parleur, avec un élément de vibrateur qui est dirigé vers le haut.

3. Déflecteur arrière selon la revendication 2, dans lequel :
ledit corps de déflecteur (24) comprend un élément de protection (32) prévu dans ladite fenêtre (31), des premier et deuxième haut-parleurs (26) étant prévus sur les côtés droit et gauche dans la section d'aile (28) du corps de déflecteur (24).

4. Déflecteur arrière selon l'une quelconque des revendications 1 à 3, dans lequel ledit corps de déflecteur (24) est prévu avec un trou d'aération (51) qui est ouvert sur son côté arrière.

5. Déflecteur arrière selon la revendication 3, dans lequel un haut-parleur de graves (27) est prévu à l'intérieur dudit dossier (25).

6. Déflecteur arrière selon la revendication 3, dans lequel un feu de freinage de support supérieur (44) est prévu dans la section d'aile (28) dudit corps de déflecteur (24), et un trou d'aération (51) qui est ouvert sur le côté arrière dudit corps (24) est prévu au-dessous dudit feu de freinage de support supérieur (44).

7. Déflecteur arrière selon l'une quelconque des revendications 1 à 3, dans lequel chacune desdites sections de déflecteur (22) comprend une partie convexe (35) sur sa surface inférieure, s'expansant vers un fond, définissant une partie relativement épaisse sur son côté avant, alors qu'une partie relativement fine est définie sur son côté arrière.
